# EUROPÄISCHE PATENTSCHRIFT

(11) **EP 0 330 046 B1**
(45) Veröffentlichungstag und Bekanntmachung des Hinweises auf die Patenterteilung: **20.04.1994**
(21) Anmeldenummer: 89102464.8
(22) Anmeldetag: 14.02.1989
(51) Int. Cl.: B29B 17/02, B03B 9/06, H01B 15/00

(54) **Verfahren zur Wiedergewinnung von Kunststoffen aus Metall-/Kunststoffabfällen**
Method for reclaiming plastics for metal/plastics waste materials
Procédé de récupération de matières plastiques à partir de déchets métaux/plastiques

(30) Priorität: 25.02.1988 DE 3805875
(43) Veröffentlichungstag der Anmeldung: 30.08.1989
(73) Patentinhaber: kabelmetal electro GmbH, 30002 Hannover (DE)
(72) Erfinder: Völker, Martin, Dr.-Ing., D-3012 Langenhagen (DE)

(56) Entgegenhaltungen:
- DE-A- 3 340 165
- GB-A- 1 453 851
- US-A- 3 749 322
- US-A- 3 941 684
- US-A- 3 997 121

## Beschreibung

Die vorliegende Erfindung geht aus von einem Verfahren zur Wiedergewinnung von im wesentlichen metallfreien Kunststoffen aus Abfällen, die überwiegend die Kombination Kunststoff/Metall enthalten, nach dem Obergriff des Anspruches 1.

Eine Vielzahl von Vorschlägen ist bereits bekannt geworden mit dem Ziel, aus mehreren unterschiedlichen Komponenten zusammengesetztes Gut aufzubereiten und die enthaltenen Metallanteile wiederzugewinnen. Um das zu erreichen, kann man beispielsweise so vorgehen (DE-OS 21 01 739), daß das aus den unterschiedlichen Komponenten zusammengesetzte Gut tiefen Temperaturen ausgesetzt wird. Hierbei versprödendes Kunststoffmaterial kann dann mechanisch z. B. von einem metallischen elektrischen Leiter entfernt werden. Durch das benötigte Kühlsystem ist das Verfahren kostenintensiv, eine Wiederverwendung des Kunststoffes ist nicht vorgesehen.

In ähnlicher Weise arbeitet ein anderes bekanntes Verfahren (DE-OS 23 47 108), bei dem während oder nach der Abkühlung der Metall-Kunststoff-Verbundteile versucht wird, durch mechanische oder andere Einwirkung wie z. B. durch Ultraschall oder magnetische Schwingungen eine Trennung zwischen Metall und Kunststoff zu erreichen.

Bekannt ist es auch (DE-PS 30 39 870), bei einem Verbundkörper aus Gummi und Metall diesen Verbundkörper bis zum Glühen des metallischen Bestandteiles zu erwärmen, wobei die auf dem Metall aufliegende Grenzschicht des Gummis thermisch zersetzt und dann das Metall vom Gummi abgetrennt wird. Eine Wiederverwendung des Gummis ist bei diesem Verfahren weder beabsichtigt noch wegen der speziellen Behandlungsweise möglich.

Gleiches gilt für ein anderes bekanntes Verfahren (DE-OS 34 22 924), bei dem der aus Metall und Gummi und/oder Kunststoff bestehende Verbundkörper erhitzt und den heißen Dämpfen eines Lösungsmittels ausgesetzt oder in ein erhitztes Lösungsmittel eingetaucht wird, wobei es zu einer Ablösung des Kunststoffes oder Gummis von den Metallteilen kommt.

Ein bekanntes Verfahren zur Trennung von Metalldrähten von ihrer Isolation (DE-OS 19 24 640) sieht eine mehrstufige mechanische Zerkleinerung der Metalldrähte vor, wobei das zerkleinerte Gemisch aus Metalldrahtstücken und Isoliermaterial einer mehrstufigen elektrostatischen Aufbereitung in einer Windsichtung mit schwachem Luftstrom unterworfen wird. Das so aus den unterschiedlichen Zerkleinerungsstufen erhaltene Metallgranulat kann gesammelt und wiederverwendet werden.

Die US-PS 3 749 322 betrifft ein Verfahren zum Zerkleinern und Mahlen von Drahtabfällen. Bei diesem Verfahren erfolgt zunächst eine Prallzerkleinerung der isolierten Drahtstücke in einer Zentrifugalmühle. Die Trennung in blanke Drahtstücke und rohrförmige Isolierstücke soll dabei aufgrund der unterschiedlichen Dichte der Kunststoff- und Metallteilchen erfolgen, da beim Aufprall auf die umgebenden Wandflächen die Kunststoffteilchen weniger Energie als die dichteren Metallteilchen absorbieren. Mit diesem bekannten Verfahren läßt sich zwar der wesentliche Teil des Metalls wiedergewinnen. Die sich nach dem Mahlen ergebenden kurzen Rohrstücke der Kunststoffisolierung können aber durch das Abschlagen von dem zugehörigen Metallabschnitt noch so viel Metallanteil enthalten, daß sie für eine Wiederverwertung z. B. in einer Kabelisolierung nicht in Frage kommen.

Bei allen diesen bekannten Verfahren ist eine Wiederverwendung des Kunststoffes nicht vorgesehen. Aufgrund der speziellen Behandlungsarten ist die Wiederverwendung insbesondere bei technisch höherwertigen Erzeugnissen aber auch nicht möglich oder empfehlenswert.

Ausgehend von dem aus der US-PS 3 749 322 bekannten Stand der Technik liegt der Erfindung daher die Aufgabe zugrunde, eine Möglichkeit auch der Wiedergewinnung von Kunststoffen zu finden, wobei die wiedergewonnenen Materialien praktisch metallfrei sind und problemlos in einen erneuten Fertigungsprozeß eingegeben werden können.

Gelöst wird diese Aufgabe gemäß der Erfindung durch die kennzeichnenden Merkmale des Anspruches 1. Das Verformen der Abschnitte zu feinsten Kunststoffasern bei gleichzeitigem Verkugeln der metallischen Bestandteile führt zu Teilchen großen Strömungswiderstandes bei kleinem Gewicht (Fasern) und Teilchen geringen Strömungswiderstandes bei großem Gewicht (Kugeln). Auf diese Weise läßt sich mit geringem Aufwand in einer anschließenden Wind- und Trägheitssichtung die Trennung von Metall und Kunststoff soweit durchführen, daß der Kunststoff weniger als 0,1 % Metallanteil enthält. Dieser praktisch metallfreie Kunststoffabfall kann ebenso wie der Metallabfall selbst einer Weiterverarbeitung zugeführt werden.

Durch die in den Unteransprüchen aufgeführten Merkmale sind vorteilhafte Weiterbildungen und Verbesserungen möglich.

Als besonders vorteilhaft hat es sich erwiesen, wenn mindestens das Verformen der Abschnitte und die Trennung von Fasern und Kugeln in einem Arbeitsgang erfolgt. Damit ist ein rationeller Betrieb möglich.

Um neben der Wiedergewinnung von Kunststoffen und Metallen aus Abfällen auch gleichzeitig eine Aufbereitung der wiederzuverwendenden Kunststoffe durchzuführen, ist es vorteilhaft, wenn zum Verformen der zu Abschnitten zerkleinerten Abfälle bereits die Zusatzstoffe für den wiederzugewinnenden Kunststoff miteingegeben werden. Die Zugabe dieser Zusätze bereits während des Mahlvorganges führt zu einer extrem günstigen Verteilung der zugegebenen Stoffe im Kunststoff oder Kunststoff-Metall-Gemisch. Die Zusatzstoffe können daher genau dosiert bzw. kostengünstigeres Material kann verwendet werden. Auch kann wegen der besseren Zumischung bei den Zusatzstoffen knapper dosiert werden.

Für eine besonders wirtschaftliche Durchführung des erfindungsgemäßen Verfahrens ist es vorteilhaft, wenn in einem kontinuierlichen Durchlauf die zu Abschnitten zerkleinerten Abfälle aus einem Vorrat entnommen und zu einem rieselfähigen Gemisch verformt, das rieselfähige Gemisch gespeichert und ggf. getrocknet sowie anschließend das Metall vom Kunststoff getrennt wird. Schließlich wird der in dem gleichzeitig als Transportmittel verwendeten Luftstrom noch vorhandene Kunststoff herausgefiltert.

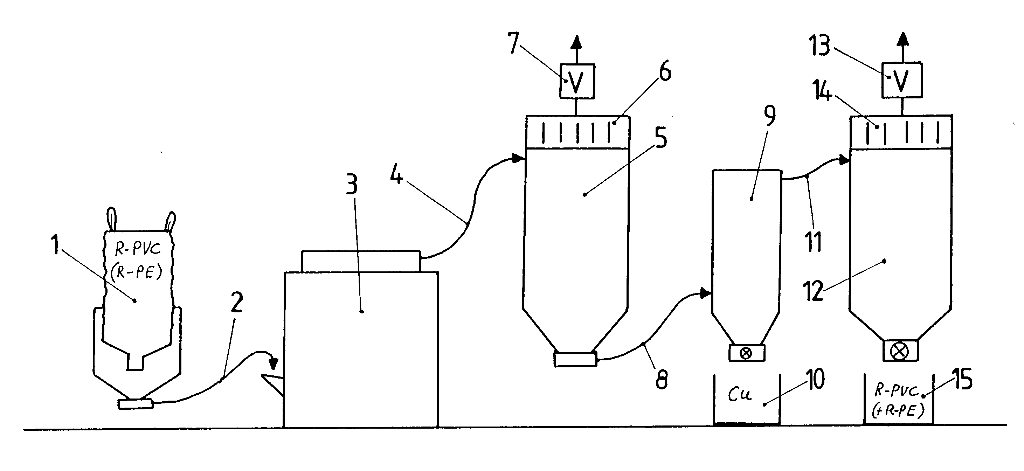

Die Erfindung sei an Hand des in der Zeichnung dargestellten Ausführungsbeispieles näher erläutert.

Zur Aufbereitung von Kabelschrott beispielsweise mit dem Ziel, die Metall- und Kunststoffanteile in zwei Fraktionen zu trennen, werden die Abfälle zu Abschnitten zerkleinert und in die Beschickungseinrichtung 1 eingegeben. Vom Ausgang dieser Beschickungseinrichtung werden die Abschnitte z. B. mittels Spiralförderrohre 2 an die Mühle 3 weitergeleitet. In der Mühle 3, deren Zerkleinerungswirkung auf einem sehr hohen Luftdurchsatz beruht, mit dessen Hilfe die Mahlluft in extreme Turbulenzen versetzt wird, werden die Abschnitte durch gegenseitige Stöße und Stoßvorgänge an feststehenden sowie rotierenden Maschinenteilen kurzfristig zu Kunststoffasern und Metallkugeln verformt. Dieser Vorgang wird auch als Prallzerkleinerung bezeichnet. Der angesprochene hohe Luftdurchsatz bewirkt zudem eine ständige Wärmeabfuhr während des Mahlvorganges, so daß es nicht zu einem Verkleben oder Verschweißen der Kunststoffteilchen kommen kann.

Der Luftstrom für den Mahlvorgang dient gleichzeitig als Förderstrom für das zerkleinerte Kunststoff-Metall-Gemisch, das über die Verbindungsrohrleitung 4 in den Abscheider 5 gelangt. Der Abscheidung der Feststoff-Teilchen dient der Filter 6, durch den die Mahlluft hindurch tritt und über den Auslaß 7 ins Freie gelangt bzw. zur Mühle 3 zurückgeführt wird. Das im Abscheider 5 ständig anfallende Kunststoff-Metall-Gemisch gelangt über die Verbindungsrohrleitung 8 in die Sichteranlage 9. Diese besteht beispielsweise aus einem sog. Ein- oder Mehrradsichter, dessen Sichtprinzip darin besteht, daß die von unten zugeführte Sichtluft das Sichtrad von außen nach innen durchströmt und dabei das Feingut, d. h. den faserformigen Kunststoff, austrägt, während das Grobgut, d. h. die verkugelten Metallabschnitte, vom Sichtrad abgewiesen nach unten fallen und von dort entnommen und im Behälter 10 aufgefangen werden können. Anstelle der erwähnten Ein- und Mehrradsichter können selbstverständlich auch andere Einrichtungen verwendet werden, sofern sie geeignet sind, für eine ausreichende Trennung der Kunststoff- und Metallteilchen zu sorgen.

Mittels der Förderrohrleitung 11 wird der faserförmige Kunststoff als Feingut mit dem Luftstrom der Sichteranlage 9 dem Abscheider 12 zugeführt. Die eingeführte Luft tritt durch den Auslaß 13 nach draußen bzw. wird zu dem Abscheider 5 in einem Kreislauf zurückgeführt, wobei das Feingut am Filter 14 abgeschieden wird, nach unten fällt und dem Behälter 15 entnommen werden kann.

Werden, wie nach der Erfindung auch vorgesehen, zusammen mit den zu Abschnitten zerkleinerten Abfällen Füllstoffe wie Kreide, Ruße oder dergleichen sowie Farbpigmente oder zur Anpassung an besondere Eigenschaften auch sonstige polymere Werkstoffe in die Beschickungseinrichtung 1 eingegeben, so werden diese in der Mühle 3 mitgemahlen sowie sehr gut in der Gesamtmischung verteilt. Die Trennung von schweren Metallteilchen und leichten Kunst- oder sonstigen Stoffen in zwei Fraktionen erfolgt in der beschriebenen Weise.

Man kann selbstverständlich auch eine Erweiterung der erfindungsgemäßen Anlage vornehmen, indem eine Abscheidung in drei oder mehr Fraktionen erfolgt. Wesentlich bleibt auch dann, daß das eingegebene Material gemahlen und anschließend in einer oder mehreren Stufen gesichtet wird.

## Patentansprüche

1. Verfahren zur Wiedergewinnung von im wesentlichen metallfreien Kunststoffen aus Abfällen, die überwiegend die Kombination Kunststoff/Metall enthalten, insbesondere aus Kabelschrott, wobei die Abfälle zu Abschnitten zerkleinert und anschließend gemahlen, die Einzelbestandteile in einem Luftstrom voneinander getrennt und ggf. die wiedergewonnenen Kunststoffe zur Weiterverwendung aufbereitet werden, dadurch gekennzeichnet, daß die zu Abschnitten zerkleinerten Abfälle bei hohem Luftdurchsatz zu einem rieselfähigen Gemisch aus Kunststoffasern und Metallkugeln verformt werden.

2. Verfahren nach Anspruch 1, dadurch gekennzeichnet, daß mindestens das Verformen der Abschnitte und die Trennung von Fasern und Kugeln in einem Arbeitsgang erfolgt.

3. Verfahren nach Anspruch 1 oder 2, bei dem gleichzeitig mit der Trennung in Metall und Kunststoff eine Aufbereitung des Kunststoffes erfolgt, dadurch gekennzeichnet, daß zum Verformen der zu Abschnitten zerkleinerten Abfälle bereits die Zusatzstoffe für den wiederzugewinnenden Kunststoff mit eingegeben werden.

4. Verfahren nach einem der Ansprüche 1 bis 3, dadurch gekennzeichnet, daß in einem kontinuierlichen Durchlauf die zu Abschnitten zerkleinerten Abfälle aus einem Vorrat (1) entnommen und zu einem rieselfähigen Gemisch verformt, das rieselfähige Gemisch gespeichert und ggf. getrocknet sowie anschließend das Metall vom Kunststoff getrennt wird und daß schließlich der in dem gleichzeitig als Transportmittel verwendeten Luftstrom noch vorhandene Kunststoff herausgefiltert wird.

## Claims

1. Process for reclaiming essentially metal-free plastics from wastes containing predominantly the combination of plastic/metal, in particular from cable scrap, the wastes being comminuted into chips and subsequently ground, the individual components being separated from one another in an air current and, if appropriate, the reclaimed plastics being treated for reuse, characterized in that the wastes comminuted into chips are deformed at a high air throughflow rate to form a pourable mixture of plastic fibres and metal beads.

2. Process according to Claim 1, characterized in that at least the deformation of the chips and the separation of fibres and beads take place in one operation.

3. Process according to Claim 1 or 2, in which, simultaneously with the separation into metal and plastic, a treatment of the plastic takes place, characterized in that the additives for the plastic to be reclaimed are already co-fed in for deforming the wastes comminuted into chips.

4. Process according to any of Claims 1 to 3, characterized in that, in a continuous throughflow, the wastes comminuted into chips are taken from a supply (1) and deformed to form a pourable mixture, the pourable mixture is stored and, if required, dried and subsequently the metal is separated from the plastic and in that, finally, any plastic still present in the air current used simultaneously as transport means is filtered out.

## Revendications

1. Procédé de récupération de matières plastiques, essentiellement exemptes de métal, à partir de déchets qui contiennent principalement la combinaison plastique/métal, en particulier à partir de chutes de câbles, dans lequel on broie les déchets pour donner des morceaux et on les moud ensuite, on sépare les différents constituants l'un de l'autre dans un flux d'air et on prépare éventuellement les matières plastiques récupérées pour réemploi, procédé caractérisé par le fait que, avec un débit d'air élevé, les déchets broyés pour donner des morceaux forment un mélange pouvant couler, constitué de fibres de plastique et de billes de métal.

2. Procédé selon la revendication 1, caractérisé par le fait qu'au moins le formage des morceaux et la séparation des fibres et des billes se font en un processus de travail.

3. Procédé selon la revendication 1 ou 2, dans le cas duquel une préparation de la matière plastique se fait en même temps que la séparation entre métal et plastique, caractérisé par le fait que, lors du formage des déchets broyés pour donner des morceaux, on ajoute déjà les additifs pour le plastique à récupérer.

4. Procédé selon l'une des revendications 1 à 3, caractérisé par le fait que, dans un parcours continu, on extrait d'un réservoir (1) les déchets broyés pour donner des morceaux et on les met en forme d'un mélange pouvant couler, on stocke le mélange pouvant couler et éventuellement on le sèche puis ensuite on sépare le métal d'avec le plastique et qu'enfin on extrait par filtrage le plastique qui peut encore se trouver dans le flux d'air employé simultanément comme moyen de transport.
